# EUROPEAN PATENT APPLICATION

(11) **EP 4 789 828 A1**
(43) Date of publication of application: **12.08.2026**
(21) Application number: 24874713.1
(22) Date of filing: 03.10.2024
(51) Int. Cl.: B27G 13/08, B23K 26/21, B23K 26/32, B23K 26/342, B23P 15/32, B23P 15/38, B26D 1/00, B27G 15/00

(54) **CUTTER FOR PROCESSING WOOD OR PAPER AND METHOD FOR MANUFACTURING SAME**

(30) Priority: 04.10.2023 JP 2023173279
(71) Applicant: Kanefusa Kabushiki Kaisha, Ohguchi-cho, Niwa-gun Aichi 480-0192 (JP)
(72) Inventor: FUJITA, Shun, Niwa-gun, Aichi 480-0192 (JP); FUTAANA, Nobukazu, Niwa-gun, Aichi 480-0192 (JP); OGASAWARA, Makoto, Niwa-gun, Aichi 480-0192 (JP); KOYAMA, Kazuyoshi, Niwa-gun, Aichi 480-0192 (JP)
(74) Representative: Kuhnen & Wacker Patent- und Rechtsanwaltsbüro PartG mbB
(86) International application number: PCT/JP2024/035530
(87) International publication number: WO 2025/075113

(57) **Abstract**

Provided is a cutter for processing wood or paper, the cutter having high wear resistance and excellent durability. The cutter has a base metal and blade tip formed as a clad layer integrated on the base metal by melting a metal material, which contains, by mass, 10% or more of V, 5% or more of Cr, and 50% or more of Fe, using a laser beam while supplying the metal material onto the base metal. It is found that the material exhibits a high level of durability against both abrasive wear and corrosion wear. That is, the incorporation of Cr reduces corrosion wear, and the incorporation of V reduces abrasive wear. In addition, it is found that the clad layer formed by laser cladding has less thermal impact on the base metal as compared to general brazing or the like and can achieve strong joint strength.

## Description

### Technical Field

The present disclosure relates to a cutting tool for processing wood or paper, which is suitable for cutting, sawing, grinding, or similar processing for wood, wood-based materials, paper or the like, and a manufacturing method for the cutting tool.

### Background Art

Since moisture in wood acts on a cutting edge of a cutting tool for processing wood or paper, the cutting edge is significantly affected by corrosive wear in addition to abrasive wear. Therefore, a corrosion-resistant material is desired as a material of the cutting edge.

In recent years, paper consumption has been increasing due to global population growth. Therefore, in order to reduce the use of virgin wood pulp as a raw material, recycling of waste paper is being promoted. In a papermaking process, corrosion prevention measures are crucial in each facility because chemical treatment of cellulose, which is a main component of raw pulp, is involved. In a waste paper recycling process as well, a cutting tool (pulper blade for papermaking) that defibrates waste paper by pulverizing the waste paper together with chemicals is used, and enhancing the corrosion resistance and wear resistance of the cutting tool for defibration is desired in order to further improve processing capability.

Therefore, in order to extend the service life of cutting tools for processing wood or paper, materials with excellent wear resistance, such as high-speed steel and cemented carbide (WC-Co), are commonly used as cutting-edge materials. Such a cutting-edge material is joined to a metal base by brazing or the like.

However, when the cutting edge material is joined to the metal base by brazing or the like, there is a risk of delamination depending on the joint quality, and it is difficult to say that the conventional materials achieve sufficient durability.

### Citation List

### [Patent Literature]

Patent Literature 1: WO2018/216641

### Summary

### Technical Problem

The present disclosure has been made in view of the above circumstances, and an object of the present disclosure is to provide a cutting tool for processing wood or paper, which has high resistance to wear and excellent durability, and a method for manufacturing the cutting tool.

### Solution to Problem

In order to solve the above problems, the inventors of the present disclosure have performed investigations about various materials, and as a result, have found materials suitable for cutting tools for processing wood or paper, thereby completing the following invention. That is, a cutting tool for processing wood or paper according to the present disclosure, which solves the above problems, includes: a metal base; and a cutting edge part formed of a clad layer. The clad layer is integrated with the metal base by supplying a metal material onto the metal base and melting the metal material with a laser beam. The metal material contains, by mass, 10% or more of V, 5% or more of Cr, and 50% or more of Fe.

As will be described in detail in Examples below, it is found that the above material contains Cr to reduce corrosive wear and contains V to reduce abrasive wear, and the combined effects of these two elements result in high resistance to both abrasive wear and corrosive wear. Furthermore, it is found that the clad layer formed through laser cladding has less thermal impact on the metal base, compared to general brazing or the like, and achieves strong joint strength.

In particular, the metal material preferably contains 20% or less of V and 15% or less of Cr. The metal material preferably contains, by mass, 1.0% or more of C and/or more than 0% of W. Containing C allows formation of vanadium carbide with high hardness, thereby further reducing abrasive wear.

A method for manufacturing a cutting tool for processing wood or paper according to the present disclosure, which solves the above problems, includes: a laser cladding process of forming one or more clad layers integrated with a metal base by supplying a metal material onto the metal base and melting the metal material with a laser beam, the metal material containing, by mass, 10% or more of V, 5% or more of Cr, and 50% or more of Fe; and a cutting edge formation process of forming a cutting edge part from the clad layers.

### Brief Description of Drawings

Fig. 1 is a schematic perspective view of a chamfering cutter used in an example;
Fig. 2 is a schematic front view of the chamfering cutter used in the example;
Fig. 3 is a graph showing the amount of edge retraction when cutting MC nylon as a workpiece in the example;
Fig. 4 is a graph showing the amount of edge retraction when cutting oak wood as a workpiece in the example;
Fig. 5 is a perspective view of a gimlet in the example; and
Fig. 6 is a schematic view showing a process of manufacturing the gimlet in the example.

### Description of Embodiments

Hereinafter, a cutting tool for processing wood or paper and a method for manufacturing the cutting tool according to the present disclosure will be described in detail, based on an embodiment. Unless otherwise specified, a numerical range "x to y" described in the specification includes a lower limit x and an upper limit y. A new numerical value range may be formed by arbitrarily combining such upper limit values, lower limit values, and numerical values described in the examples. The new numerical value may be a range that excludes one or both of the upper and lower limits. Furthermore, numerical values selected arbitrarily from any of the above numerical ranges may be used as numerical values for the upper and lower limits of the new numerical value range.

### (Cutting tool for processing wood or paper)

The cutting tool for processing wood or paper according to the present embodiment includes a metal base and a cutting edge part. Examples of the cutting tool for processing wood or paper according to the present embodiment include a gimlet, a cutter, a finger cutter, a plane knife, a pulper blade, a saw, and a crushing blade. Each of these cutting tools for processing wood or paper is configured such that the cutting edge part is replaceable as a replacement blade, or such that the entire cutting tool is configured as one component.

### · Metal base

The metal base is a portion, of the cutting tool for processing wood or paper, on which the cutting edge part is directly formed. The metal base may be formed of any material such as a known steel material, and may be formed of a material with excellent corrosion resistance such as stainless steel.

The size and shape of the metal base are not particularly limited. When the cutting tool for processing wood or paper is configured such that a replacement blade formed at the tip is removable, the metal base forms the replacement blade together with the cutting edge part; otherwise, the metal base is a member that forms most of the cutting tool for processing wood or paper except for the cutting edge part.

For example, a chamfering cutter, in which a flat replacement blade is formed to be removable, includes: a flat replacement blade corresponding to a wood cutting blade of the present embodiment; and a cylindrical body having an attachment groove, formed on the outer periphery, in which the replacement blade is removably fixed.

### · Cutting edge part

The cutting edge part is integrally formed on the surface of the metal base. The shape of the cutting edge part is appropriately selected for each type of cutting tool for processing wood or paper. The cutting edge part is formed of a clad layer that is integrated with the metal base by melting a metal material with a laser beam while supplying the metal material onto the metal base. The clad layer thus formed is adjusted into a cutting edge shape through grinding, cutting, polishing, etc., to manufacture the cutting edge part. Details of forming the cutting edge part will be described below in the section "Manufacturing method for cutting tool for processing wood or paper", and therefore are not described here. The cutting edge part is formed of a metal material containing V, Cr, and Fe. Elements other than these elements may also be contained. For example, W, C, Si, Mn, and Mo may be contained. These elements may be contained as alloys or may form intermetallic compounds.

The content of V, based on the mass of the metal material, has a lower limit of 10%, and 13%, 15%, and 17% may be adopted. As for upper limits, 25%, 23%, 21%, and 19% may be adopted. These upper limits and lower limits may be combined in any way.

The content of Cr, based on the mass of the metal material, has a lower limit of 5%, and 8%, 11%, and 14% may be adopted. As for upper limits, 20%, 18%, and 16% may be adopted. These upper limits and lower limits may be combined in any way.

The content of Fe, based on the mass of the metal material, has a lower limit of 50%, and 55%, 60%, and 65% may be adopted. As for upper limits, 85%, 80%, and 75% may be adopted. These upper limits and lower limits may be combined in any way.

The content of C, based on the mass of the metal material, has lower limits of 1.0%, 2.0%, and 3.0%, and upper limits of 5.0%, 4.5%, and 4.0%. These upper limits and lower limits may be combined in any way. C is preferably present as vanadium carbide.

The content of W, based on the mass of the metal material, has lower limits of more than 0%, 0.5%, and 1.0%, and upper limits of 4.0%, 3.0%, and 2.0%. These upper limits and lower limits may be combined in any way.

### (Manufacturing method for cutting tool for processing wood or paper)

The manufacturing method for the cutting tool for processing wood or paper according to the present embodiment is well suited for manufacturing the cutting tool for processing wood or paper according to the present embodiment. Since the cutting tool for processing wood or paper to be manufactured is the same as the cutting tool for processing wood or paper according to the present embodiment described above, further description is omitted. The manufacturing method for the cutting tool for processing wood or paper according to the present embodiment includes a laser cladding process and a cutting edge formation process.

The laser cladding process is a process of forming one or more clad layers on the surface of a metal base by supplying a metal material onto the metal base and melting the metal material with a laser beam (laser cladding). Unlike plasma arc cladding, in laser cladding, a large amount of heat does not enter the base material (metal base), and energy is introduced to a narrow area in a short period of time, so that the cooling rate of the formed clad layer is increased.

As a result, a higher hardness is obtained than in ordinary quenching heat treatment, and the metal structure becomes fine and dense, resulting in high toughness. Furthermore, the effect of suppressing distortion is achieved in the case of a flat, elongated product that requires straightness. Moreover, the laser cladding process allows the shape of the clad layer, and consequently the shape of the cutting edge, to be set according to the intended use, by appropriately controlling the form of the metal material as supplied. For example, when the intended use is regrinding, the shape of the clad layer is set without waste by considering the amount of regrinding.

The laser cladding process is a process of supplying a metal material onto the surface of a metal base and integrating the metal material with the surface of the metal base by a laser beam. The metal material is composed of the components of the metal material described for the cutting tool for processing wood or paper according to the present embodiment. The form of the metal material is not particularly limited, and a metal powder material and a cladding wire may be adopted. When a metal powder material is adopted as the metal material, the particle size preferably has a lower limit of 10 µm, 30 µm, or 50 µm and an upper limit of 100 µm, 200 µm, or 300 µm, and it is particularly preferable that the particle size is uniform. These upper limits and lower limits may be combined in any way. Any method may be used to prepare the metal powder material, and atomization, pulverization, etc., are adopted. The wire diameter of the cladding wire is preferably smaller than the thickness of the clad layer.

In the laser cladding process with a laser beam, the surface of the metal base as the base material is also heated and melted to form an alloy layer at the boundary with the clad layer, which also leads to elimination of poor bonding caused by brazing defects, voids, and poor adhesion. Therefore, the power of the laser beam is preferably sufficient to melt the metal material and to avoid melting of the metal base as much as possible while the clad layer is firmly bonded.

The amount of the metal material to be supplied is not particularly limited, and it is desirable to supply an amount that allows the entire metal material to be melted by irradiation with the laser beam and integrated with the surface of the metal base. In particular, the metal material is preferably supplied such that the thickness of the formed cutting edge part is approximately 0.1 mm or more and 10 mm or less.

In order to form a cutting edge part of the required thickness in a wood cutting blade, a required number of clad layers are laminated. Making each clad layer thinner has the advantage that the amount of heat input to the metal base is reduced and thereby thermal deformation of the base material is suppressed. Furthermore, the cooling rate due to thermal diffusion from the clad layer to the metal base is improved, thereby increasing the hardness of the clad layer.

Therefore, the thickness of the clad layer is preferably 10 mm or less, and a thinner clad layer (e.g., about 0.1 mm to 10 mm thick) may be formed. When making each clad layer thinner, clad layers are laminated until a thickness equal to or greater than the thickness of the cutting edge part is reached.

The laser cladding process is performed until the size of the clad layer reaches the required size and shape of the cutting edge part. Since an area that is heated by applying a laser beam is often smaller than the size of the cutting edge part, irradiation with the laser beam is performed along the shape of the cutting edge part to be manufactured (shape in the expansion direction of the surface of the metal base).

As described above, when the clad layer is formed in the laser cladding process, a plurality of clad layers are laminated in the stacking direction (thickness direction) with respect to the surface of the metal base. Furthermore, irradiation with a laser beam may be performed a plurality of times to divide the irradiation in the two-dimensional direction at the surface of the metal base, according to the size of the cutting edge part, thereby forming a plurality of clad layers. Moreover, the metal material is supplied to an area to be irradiated with the laser beam while shifting the position to be irradiated with the laser beam on the metal base.

The cutting edge formation process is a process of forming a cutting edge part by adjusting the clad layer formed by the laser cladding process into a cutting edge shape through grinding, cutting, polishing, etc.

The method for manufacturing the cutting tool for processing wood or paper according to the present embodiment may include other processes such as hardening according to need. For example, after the shape of the cutting edge part is adjusted through the cutting edge formation process, heating and cooling are performed according to an appropriate temperature profile.

### Examples

Hereinafter, a wood cutting blade and a manufacturing method thereof according to the present disclosure will be described in detail based on examples.

### (Wood cutting blade used for test)

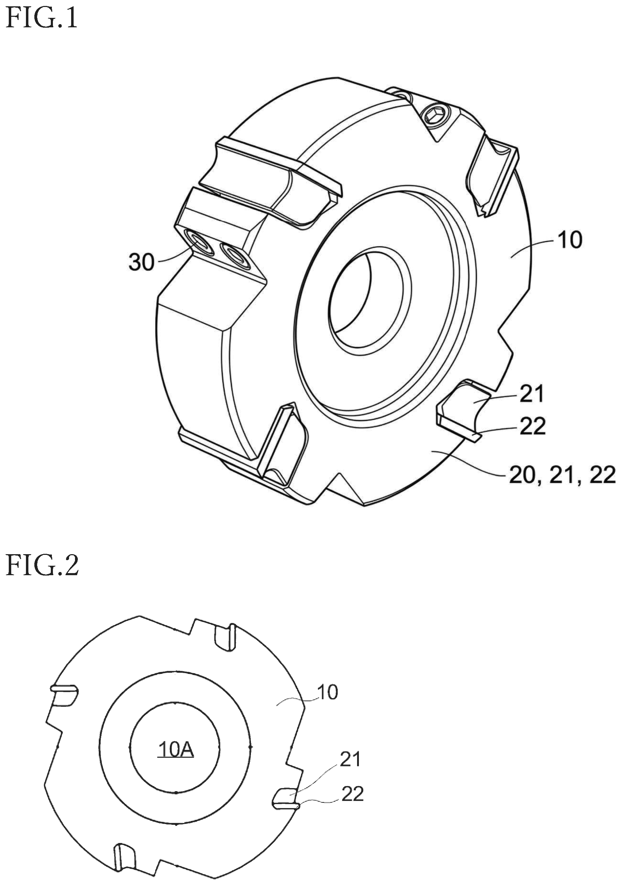

A wood cutting blade according to this example is a chamfering cutter including a body 10 and wood cutting blades 20 as shown in Figs. 1 and 2. The body 10 is a cylindrical member to which four wood cutting blades 20 are fixed evenly in the circumferential direction, and a fixing hole 10A is formed in an axial portion of the cylindrical member. The wood cutting blades 20 are fixed to the body 10 by fixing bolts 30. Each wood cutting blade 20 includes a metal base 21 and a cutting edge part 22 formed on the metal base 21. The outer diameter of the cutting edge part was 125 mm.

### (Wood cutting blade for test)

### · Test Example 1

A clad layer was formed on the metal base 21 (made of carbon tool steel) with a laser beam by using a metal powder material as a metal material containing 15% of V, 11% of Cr, 70% of Fe, 3.0% of C, and 0.5% of W.

### · Test Example 2

A wood cutting blade 20 was manufactured by the same method as that in Test Example 1 except that a metal powder material made of a cobalt-based alloy (Stellite 6) was used.

### · Test Example 3

A wood cutting blade 20 was manufactured by the same method as that in Test Example 1 except that a metal powder material made of a cobalt-based alloy (Stellite 12) was used.

### · Test Example 4

A wood cutting blade 20 was manufactured by the same method as that in Test Example 1 except that a metal powder material made of martensitic stainless steel (SUS440C) was used.

### · Test Example 5

A wood cutting blade 20 was manufactured by brazing a cutting edge part 22 made of high speed steel (SKH51) to a metal base 21.

### · Test Example 6

A wood cutting blade 20 was manufactured by brazing a cutting edge part 22 made of cemented carbide (WC-Co) to a metal base 21.

### (Evaluation)

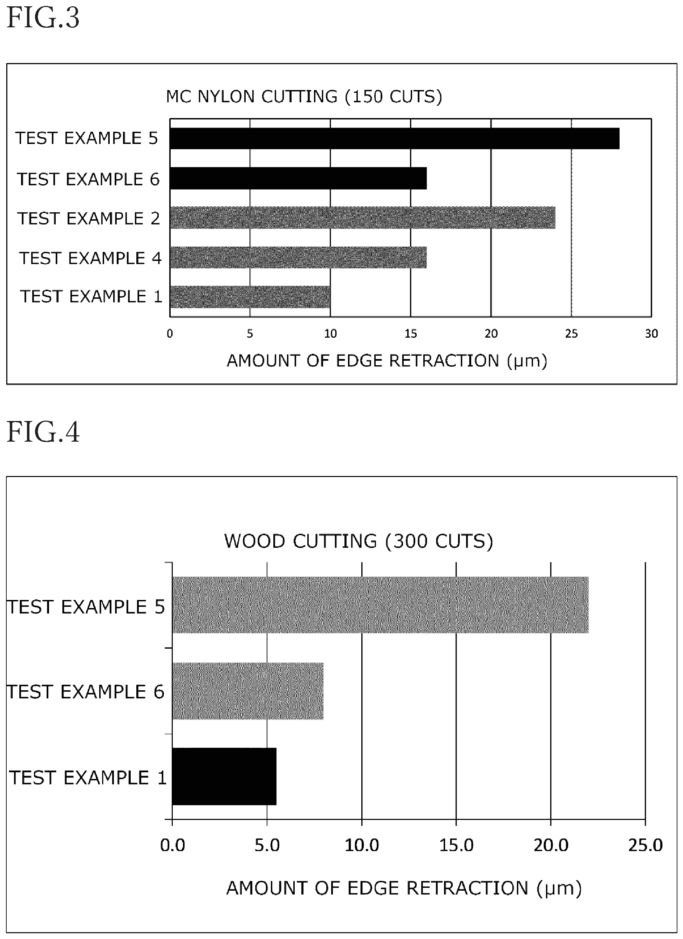

The wood cutting blade 20 of each Test Example was sharpened and then fixed to a body 10. Thereafter, a workpiece (MC nylon, oak wood) was subjected to cutting work under predetermined conditions, and the amount of edge retraction was measured. Results are shown in Fig. 3 (MC nylon) and Fig. 4 (oak wood).

The predetermined cutting conditions were: a rotational speed of 6000 rpm; 150 cuts for MC nylon; and 300 cuts for oak wood. Here, "1 cut" refers to cutting a workpiece having a length of 1 m. The cutting conditions were: a feed rate of 2 m/min for MC nylon; and a feed rate of 6 m/min for oak wood.

### (Results)

As is clear from Figs. 3 and 4, Test Example 1 as the wood cutting blade of the present disclosure had a smaller amount of edge retraction, compared to wood cutting blades made of other materials. This tendency was the same regardless of whether the workpiece was MC nylon or oak wood. In other words, it was made clear that a wood cutting blade made of a material equivalent to that of the wood cutting blade of the present disclosure has high wear resistance.

Furthermore, it was found that the wood cutting blades of Test Examples 1 to 4, in which the cutting edge part was formed using a laser beam, have less peeling of the cutting edge part, compared to a wood cutting blade in which the cutting edge part was brazed to the metal base.

### (Other examples)

As an example of a cutting tool for processing wood or paper, a case where the cutting tool is applied to a gimlet will be described. A cutting tool for processing wood or paper according to this example is a gimlet for drilling holes in wood. By combining a square chisel case around the gimlet, a square chisel gimlet for drilling square holes is configured.

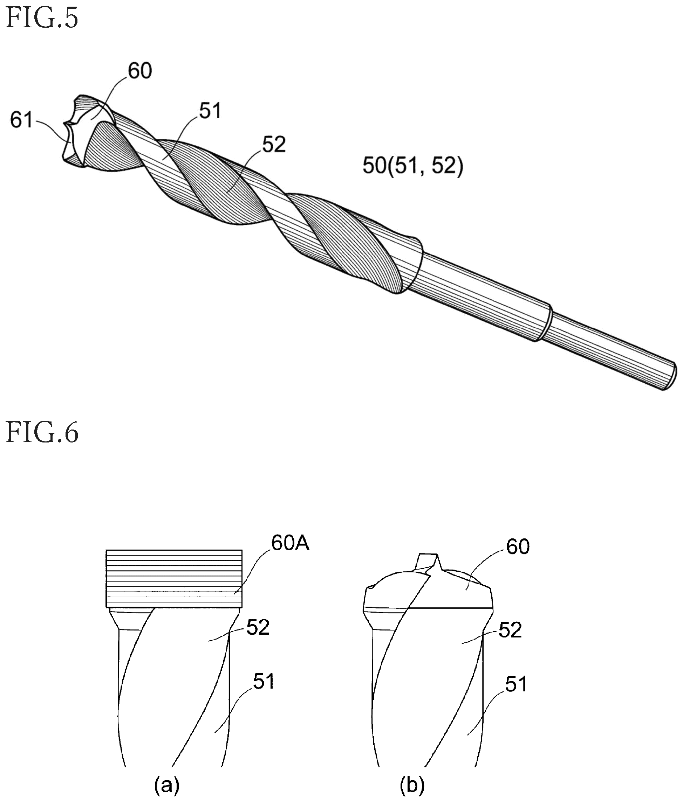

As shown in Fig. 5, the gimlet of this example includes a cylindrical body 50 and a cutting edge part 60 provided at the tip of the body 50. A cutting edge 61 is formed in the cutting edge part 60. A helical ridge 51 and a flute 52 are formed in the body 50.

When forming the cutting edge part 60, as shown in Fig. 6(a), a plurality of clad layers 60A are laminated at the tip of the body 50 to form a rough shape, and then cutting, grinding, etc., are performed to form the cutting edge part 60 (Fig. 6(b)). The clad layers are laminated such that the thickness direction of the clad layers matches the axial direction of the gimlet of this example. Since only the cutting edge part 60 at the tip is formed of a material derived from a metal material, the durability of the cutting edge part is improved while reducing the overall cost of the gimlet.

### Reference Signs List

10: Body; 10A: Fixing hole; 20: Wood cutting blade; 21: Metal base; 22: Cutting edge part; 30: Fixing bolt; 50: Body; 51: Ridge (helical ridge); 52: Flute; 60: Cutting edge part; 61: Cutting edge.

## Claims

1. A cutting tool for processing wood or paper, comprising:
a metal base; and
a cutting edge part formed of a clad layer, the clad layer being integrated with the metal base by supplying a metal material onto the metal base and melting the metal material with a laser beam, the metal material containing, by mass, 10% or more of V, 5% or more of Cr, and 50% or more of Fe.

2. The cutting tool for processing wood or paper according to claim 1, wherein
the metal material contains 25% or less of V and 20% or less of Cr.

3. The cutting tool for processing wood or paper according to claim 1 or 2, wherein
the metal material contains, by mass, 1.0% or more of C and/or more than 0% of W.

4. A method for manufacturing a cutting tool for processing wood or paper, comprising:
a laser cladding process of forming one or more clad layers integrated with a metal base by supplying a metal material onto the metal base and melting the metal material with a laser beam, the metal material containing, by mass, 10% or more of V, 5% or more of Cr, and 50% or more of Fe; and
a cutting edge formation process of forming a cutting edge part from the clad layers.
